# EUROPEAN PATENT APPLICATION

(11) **EP 3 157 193 A1**
(43) Date of publication of application: **19.04.2017**
(21) Application number: 14895464.7
(22) Date of filing: 15.09.2014
(51) Int. Cl.: H04L 9/32

(54) **REMOTE SHARING METHOD, AND VTM TERMINAL, NETWORK SIDE DEVICE AND SYSTEM**

(30) Priority: 16.06.2014 CN 201410268385
(71) Applicant: ZTE Corporation, Shenzhen, Guangdong 518057 (CN)
(72) Inventor: JING, Ling, Shenzhen Guangdong 518057 (CN)
(74) Representative: Potter Clarkson LLP
(86) International application number: PCT/CN2014/086564
(87) International publication number: WO 2015/192500

(57) **Abstract**

A remote sharing method, and a VTM terminal, network side device and system. The remote sharing method comprises: receiving a selection operation of a user requiring remote assistance when the user uses a VTM terminal to perform a financial service, and generating a dynamic password; setting a shared password according to the dynamic password; sending a remote assistance request carrying the dynamic password to a VTM network side device; receiving a remote sharing request sent by the VTM network side device according to the dynamic password; and authenticating the remote sharing request, and if the authentication is passed, remotely sharing a desktop of the financial service. Through implementation of the technical solution, the VTM terminal and the VTM network side device share a financial service desktop of the VTM terminal on the basis of a dynamic password, both sharing parties do not need to know the dynamic password, and other personnel cannot know the dynamic password and thus cannot illegally log in to the VTM terminal to steal customer information, so that the problem of insecure user information in related remote sharing technologies is solved.

## Description

### TECHNICAL FIELD

The present disclosure relates to applications of Virtual Teller Machine (VTM) technologies in financial services, and more particularly, to a method for establishing remote sharing among a VTM terminal, a VTM network side device and a VTM system, which is capable of enables a user and a bank staff in the VTM system to conduct remote sharing. The present disclosure also relates to a VTM terminal, a network side device and a system.

### BACKGROUND

Virtual Teller Machine (VTM) service is a newly-emerging banking service which integrates electronic banking services and traditional bar business. The VTM service is a combination of visual service, acoustic service, self-service and special service (a bank staff may guide a customer to transact business by videos), for example, a bank staff can communicate with a customer via video and guide the customer to perform operations. However, because of different levels of knowledge about the VTM service, some customers may still not understand how to operate some functions. Thus, only the remote video guidance is not enough. In view of this, VTM service provides a desktop sharing function. When a customer meet with difficulties, he/she can share his/her service interface with a bank staff, and then the bank staff can see the actual operation interface and guide the customer to perform operations by the video.

Related VTM sharing technology is as follows. Each VTM terminal is assigned with a sharing password or a plurality of sharing passwords. Different financial services correspond to different sharing passwords, for example, opening of a new account corresponds to a password 1, and transferring of money corresponds to a password 2, and so on. When a customer needs a remote assistance, he/she initiates an assistance request to a VTM network side device; a bank staff logs into the VTM terminal used by the customer using the password provided by the bank, and accesses the service desktop of the customer to provide targeted guidance to the customer. However, while the technology can bring great convenience to customers, insecurity problems of customer information still exist. For example, if some people illegally obtain or use the sharing passwords to log into the VTM terminal of a customer, they can steal the identity information and bank card information and the like of the customer.

Thus, there is an urgent need in related arts to provide a VTM remote sharing technology which is capable of protecting customer information from being stolen.

### SUMMARY

Embodiments of the present disclosure provides a method for remote sharing, a VTM terminal, a network side device and a system, which are capable of solving the insecurity problem of user information in existing remoting sharing technologies.

Aiming at the above problems, embodiments of the present disclosure employ the following technical solutions.

There is provided a method for remote sharing, applied in a VTM terminal in a VTM system, including:
receiving a selection operation from a user when the user conducts a financial service using the VTM terminal and needs a remote assistance, and generating a dynamic password;
setting a sharing password according to the dynamic password;
sending a remote assistance request carrying the dynamic password to a VTM network side device;
receiving a remote sharing request sent by the VTM network side device according to the dynamic password; and
verifying the remote sharing request, if the remote sharing request passes the verification, remotely sharing a desktop corresponding to the financial service.

According to an exemplary embodiment, when the sharing password is set according to the dynamic password, the method further includes: obtaining a service permission associated with the financial service, and setting a sharing permission associated with the sharing password according to the service permission;
the remotely sharing the desktop corresponding to the financial service includes:
remotely sharing the desktop corresponding to the financial service and matching the sharing permission.

According to an exemplary embodiment, before sending of the remote assistance request, the method further includes:
receiving a user operation and setting an assistance permission for remote the assistance; and
when the sharing password is set according to the dynamic password, the method further includes:
setting a sharing permission associated with the sharing password according to the assistance permission; and
the remotely sharing of the desktop corresponding to the financial service includes:
remotely sharing the desktop corresponding to the financial service and matching the sharing permission.

According to an exemplary embodiment, after remotely sharing of the desktop corresponding to the financial service, the method further includes:
receiving a user operation, and ending connection of the remote sharing according to the user operation; or receiving a disconnection request sent from the VTM network side device, and ending connection of the remote sharing; and
clearing the dynamic password and the sharing password.

There is provided a method for remote sharing, applied in a VTM network side device in a VTM system, including:
receiving a remote assistance request carrying a dynamic password sent from a VTM terminal;
extracting the dynamic password;
according to the dynamic password, sending a remote sharing request to the VTM terminal; and
receiving a desktop corresponding to a financial service remotely shared by the VTM terminal, and establishing a remote sharing with the VTM terminal.

According to an exemplary embodiment, after establishing of the remote sharing with the VTM terminal, the method further includes:
receiving an assistance termination request sent from the VTM terminal, and ending connection of the remote sharing; or receiving an operation from a bank staff, and ending the connection of the remote sharing according to the operation from the bank staff; and
clearing the dynamic password.

There is provided a method for remote sharing in a VTM system, including:
receiving, by a VTM terminal, a selection operation from a user when the user conducts a financial service using the VTM terminal and needs a remote assistance, and generating a dynamic password;
setting, by the VTM terminal, a sharing password according to the dynamic password, and sending a remote assistance request carrying the dynamic password to a VTM network side device;
extracting, by the VTM network side device, the dynamic password, and sending a remote sharing request to the VTM terminal according to the dynamic password;
receiving, by the VTM terminal, the remote sharing request sent from the VTM network side device, and verifying the remote sharing request; if the remote sharing request passes the verification, remotely sharing, by the VTM terminal, a desktop corresponding to the financial service with the VTM network side device.

There is provided a VTM terminal, including:
a first processing module configured to receive a selection operation from a user when the user conducts a financial service using the VTM terminal and needs a remote assistance, and generate a dynamic password;
a setting module configured to set a sharing password according to the dynamic password;
a first sending module configured to send a remote assistance request carrying the dynamic password to a VTM network side device;
a first receiving module configured to receive a remote sharing request sent by the VTM network side device according to the dynamic password; and
a sharing module configured to verify the remote sharing request, if the remote sharing request passes the verification, remotely share a desktop corresponding to the financial service.

According to an exemplary embodiment, the VTM terminal further includes:
a sharing-interruption module configured to receive a user operation, and end connection of the remote sharing according to the user operation; or receive a disconnection request sent from the VTM network side device, and end connection of the remote sharing; and
a clearing module configured to, after the sharing-interruption module ends the connection of the remote sharing, clear the sharing password.

There is provided a VTM network side device, including:
a second receiving module configured to receive a remote assistance request carrying a dynamic password sent from a VTM terminal;
a second processing module configured to extract the dynamic password;
a second sending module configured to, according to the dynamic password, send a remote sharing request to the VTM terminal; and
a sharing communication module configured to receive a desktop corresponding to a financial service remotely shared by the VTM terminal, and establish a remote sharing with the VTM terminal.

There is provided a VTM system, including the VTM terminal as mentioned above and the VTM network side device as mentioned above.

The technical solutions provided by embodiments can have the following advantageous effects.

In the remote sharing technology provided by embodiments of the present disclosure, when a financial service selected by a user is performed at a VTM terminal, if the user does not know how to operate, the VTM terminal receives a selection operation by which the user requests a remote assistance, and generates a dynamic password. The VTM terminal, based on the dynamic password, sets a sharing password. A VTM network side device initiates a remote sharing request based on the dynamic password, thereby realizing sharing of a financial service interface at the VTM terminal. During the procedure, neither the user nor a back staff needs to know the sharing password (and thus no leakage of password occurs), and the sharing password is set based on the dynamic password and other people cannot know the sharing password and therefore cannot illegally logs into the VTM terminal of the user to steal the user information. As a result, the technical solutions in the present disclosure can guarantee that user information cannot be illegally obtained by other people, can solve the insecurity problems of user information in remote sharing technologies in related arts, and thus users' usage experience can be improved.

### BRIEF DESCRIPTION OF THE DRAWINGS

Fig. 1 is a diagram showing functional blocks of a VTM system provided according to a first embodiment of the present disclosure;
Fig. 2 is a flow chart of a method for remote sharing according to a second embodiment of the present disclosure;
Fig. 3 is a flow chart of a method for remote sharing according to a third embodiment of the present disclosure;
Fig. 4 is a flow chart of a method for remote sharing according to a fourth embodiment of the present disclosure; and
Fig. 5 is a flow chart of a method for remote sharing according to a fifth embodiment of the present disclosure.

### DETAILED DESCRIPTION

The present disclosure will be described in detail with reference to drawings and exemplary embodiments.

One of the core ideas of the present disclosure is to improve the setting mechanism of sharing passwords in related VTM remote sharing technologies and to provide a mechanism for setting a sharing password based on a dynamic password. On this basis, the present disclosure can solve the problem in related remote sharing technologies that user information is potentially insecure because sharing passwords may be illegally accessed (or obtained) by other people.

### First Embodiment

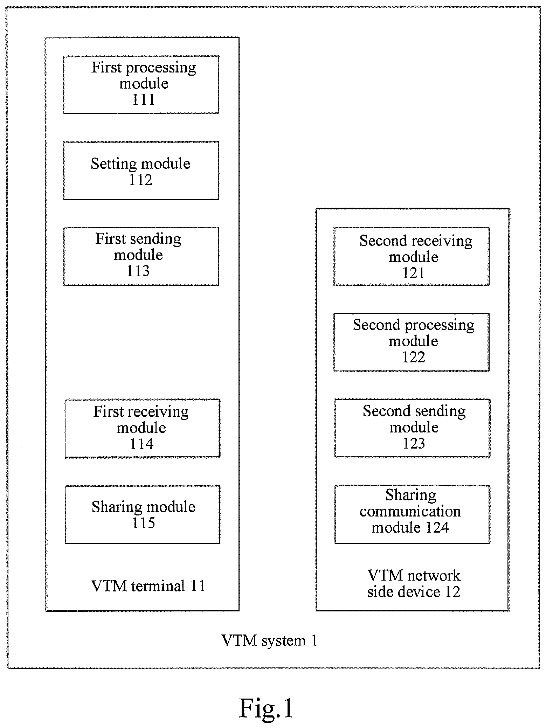

Fig. 1 is a block diagram of a VTM system according to the first embodiment of the present disclosure. As can be seen from Fig. 1, the VTM system provided by the embodiment of the present disclosure includes a VTM terminal 11 and a VTM network side device 12.

The VTM terminal 11 is configured to receive a selection operation from a user when the user conducts a financial service using the VTM terminal and needs a remote assistance, and send a remote assistance request to the VTM network side device 12.

According to an exemplary embodiment, the VTM terminal 11 may refer to a virtual teller machine operable by a user, which integrates a video system, an identity card recognition function, a fingerprint recognition function, an electronic signature function, and the like. A user can use the VTM terminal to open a new account, manage money and so on. The VTM terminal can provide 24-hour services to users. If a user selects a financial service such as opening of a new account, the VTM terminal can automatically call an interface corresponding to the service, and provide prompt to the user about how to complete the opening of a new account. If the user cannot understand the prompt from the VTM terminal, he/she can communicate with a bank staff via videos. If the user cannot still complete the opening of a new account (for example, he/she cannot find a certain functional button) even by the video with the bank staff, he/she can select the remote assistance function. After receiving the selection operation from the user, the VTM terminal 11 generates a dynamic password, adds the dynamic password into a remote assistance request, and sends both the remote assistance request and the dynamic password to the VTM network side device 12 to request a remote assistance from the bank staff.

The VTM terminal 11 may generate the dynamic password in various manners. For example, the VTM terminal 11 may multiply/add the time for selecting the remote assistance function, a source ID (i.e., the device number of the VTM terminal), and/or a destination ID (the number or code of the bank staff providing services to the user) with a random number to obtain the dynamic password. Other mechanisms for generating dynamic passwords are also possible. For example, when receiving the remote assistance request, the VTM terminal may generate a random number as the dynamic password. The dynamic password may be a binary password or a hex password, and the like. Alternatively, the dynamic password may be a string of letters, or a combination of letters and numbers, and the like.

The VTM network side device 12 is configured to send a remote sharing request to the VTM terminal 11 according to the remote assistance request.

According to an exemplary embodiment, the VTM network side device 12 may include a VTM platform which provides an access path for bank staffs. When a user needs to communicate with a bank staff via videos, the bank staff can access the VTM platform to perform video/audio communications with the user. If the bank staff cannot help the user complete the service via the video/audio communications, a remote assistance is needed to help the user to complete his/her service. At this time, the VTM network side device may receive a remote assistance request sent from the VTM terminal (the request carries the dynamic password), and then the VTM network side device may extract the dynamic password in the remote assistance request and sends a remote sharing request to the VTM terminal 11 according to the dynamic password.

The VTM terminal 11 is further configured to set a remote sharing password according to the dynamic password, receive and verify the remote sharing request initiated by the VTM network side device 12 according to the dynamic password, and if the remote sharing request passes the verification, remotely share a desktop corresponding to the financial service with the VTM network side device 12.

According to an exemplary embodiment, the VTM terminal 11 may set the remote sharing password according to the dynamic password in the following manners. For example, the VTM terminal 11 may directly take the dynamic password as the sharing password, or perform a particular algorithm on the dynamic password to obtain the sharing password, for example, a squaring algorithm, a reverse algorithm and the like. When there are a plurality of algorithms, the VTM terminal 11 may prompt the user to select an algorithm. Alternatively, the VTM terminal 11 may select digits, or letters corresponding to a particular position in the dynamic password (for example, the first eight digits, or the last ten digits, or odd number bits or the like) as the sharing password. Alternatively, the VTM terminal 11 may combine many mechanisms to obtain the sharing password. For example, the VTM terminal 11 may perform a squaring algorithm on the first eight digits to obtain the sharing password. In actual application scenarios, the VTM terminal 11 may prompt the user to select a mechanism to generate the sharing password. The VTM network side device 12 may initiate the remote sharing request according to the dynamic password in many manners. For example, the VTM network side device 12 may generate a sharing password according to the dynamic password (the mechanism for generating the sharing password at the VTM network side device is the same with that at the VTM terminal 11), and then the remote sharing request sent by the VTM network side device 12 carries the sharing password. The VTM terminal 11 compares the sharing password carried in the remote sharing request with the sharing password in the VTM terminal; if the two sharing passwords are the same, the remote sharing request passes the verification. Alternatively, the VTM network side device 12 may initial the remote sharing request according to the dynamic password as follows. The VTM network side device 12 may perform no processing on the dynamic password, in other words, the password carried in the remote sharing request is the dynamic password. At this time, the processes the dynamic password carried in the remote sharing request (the processing may be the same with the processing when the VTM terminal sets the sharing password according to the dynamic password), compares the obtained sharing password with the sharing password in the VTM terminal; if the two sharing passwords are the same, the remote sharing request passes the verification. After the remote sharing request passes the verification, it can be determined that the bank staff/VTM network side device which sends the remote sharing request is authorized, and the user information cannot be stolen. At this time, the VTM terminal 11 can share the current desktop corresponding to the service (mainly refer to the current interface). After accessing the desktop shared by the VTM terminal, the VTM side network side device can guide/assist the user to perform operations to complete the financial service.

The present embodiment provides a solution to share a desktop corresponding to a financial service between a VTM terminal and a VTM network side device based on a dynamic password, which can solve the insecurity problems in related arts caused by fixed passwords.

As can be seen from Fig. 1, the VTM terminal 11 provided by the embodiment may include a first processing module 111, a setting module 112, a first sending module 113, a first receiving module 114 and a sharing module 115.

The first processing module 111 is configured to receive a selection operation from a user when the user conducts a financial service using the VTM terminal and needs a remote assistance, and generate a dynamic password.

The setting module 112 is configured to set a sharing password according to the dynamic password.

The first sending module 113 is configured to send a remote assistance request carrying the dynamic password to a VTM network side device.

The first receiving module 114 is configured to receive a remote sharing request sent by the VTM network side device according to the dynamic password.

The sharing module 115 is configured to verify the remote sharing request, if the remote sharing request passes the verification, remotely share a desktop corresponding to the financial service.

The present embodiment provides specific solutions about how to generate a dynamic password at the VTM terminal, how to set a sharing password according to the dynamic password and when to share a desktop, and thus the technologies provided by the present disclosure can be implemented at related VTM terminals.

According to some embodiments, the VTM terminal 11 as shown in Fig. 1 may further include a sharing-interruption module and a clearing module. The sharing-interruption module is configured to receive a user operation, and end connection of the remote sharing according to the user operation; or receive a disconnection request sent from the VTM network side device, and end connection of the remote sharing. The clearing module is configured to, after the sharing-interruption module ends the connection of the remote sharing, clear the sharing password. In the embodiment, every time when the sharing is ended, the dynamic password and the sharing password are cleared, so that dynamic passwords need to be newly generated for any possible subsequent sharing operations, instead of repeat usage of the same dynamic password. Thus, users' usage experience can be further improved.

As can be seen from Fig. 1, the VTM network side device 12 provided by the embodiment of the present disclosure may include a second receiving module 121, a second processing module 122, a second sending module 123 and a sharing communication module 124.

The second receiving module 121 is configured to receive a remote assistance request carrying a dynamic password sent from a VTM terminal.

The second processing module 122 is configured to extract the dynamic password.

The second sending module 123 is configured to, according to the dynamic password, send a remote sharing request to the VTM terminal.

The sharing communication module 124 is configured to receive a desktop corresponding to a financial service remotely shared by the VTM terminal, and establish a remote sharing with the VTM terminal.

The present embodiment provides specific solutions about how to obtain a dynamic password at the VTM network side device, and how to obtain a desktop shared by a VTM terminal using the dynamic password, and thus the technologies provided by the present disclosure can be implemented at related VTM network side device.

### Second Embodiment

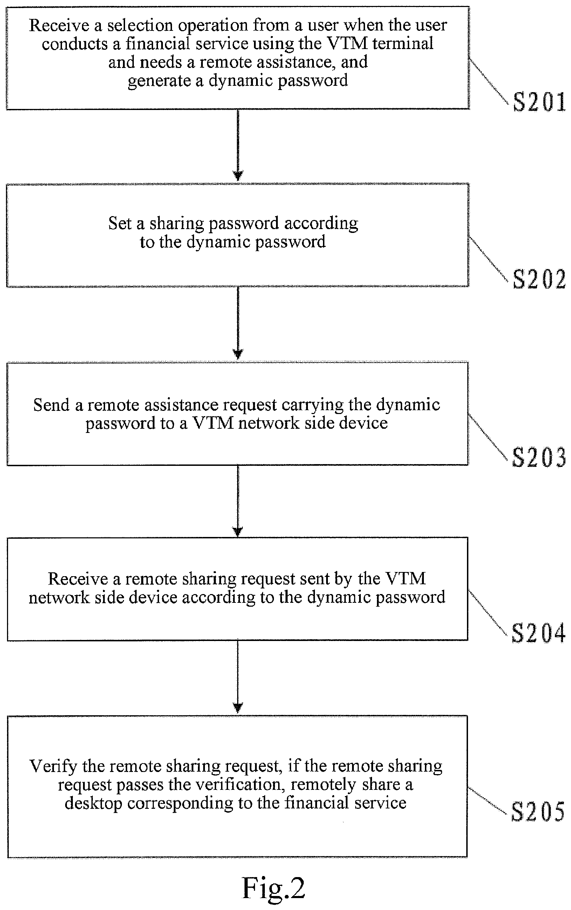

Fig. 2 is a flow chart showing a method for remote sharing according to the second embodiment of the present disclosure. As can be seen from Fig. 2, the method for remote sharing according to the second embodiment of the present disclosure, applied in a VTM terminal in a VTM system, may include the following steps.

In S201, a selection operation from a user when the user conducts a financial service using the VTM terminal and needs a remote assistance is received, and a dynamic password is generated.

In S202, a sharing password is set according to the dynamic password.

In S203, a remote assistance request carrying the dynamic password is sent to a VTM network side device.

In S204, a remote sharing request sent by the VTM network side device according to the dynamic password is received.

In S205, the remote sharing request is verified, and if the remote sharing request passes the verification, a desktop corresponding to the financial service is remotely shared.

The embodiment gives explanations about the operations in the method for remote sharing at the VTM terminal side. When the verification of the sharing password based on the dynamic password is passed, the VTM terminal shares the desktop, and thus information security can be guaranteed.

In some embodiments, steps S202 and S203 in Fig. 2 may be performed at the same time, or may be performed sequentially. Or, step S203 may be performed before step S202.

In some embodiment, in the method as shown in Fig. 2, when the sharing password is set according to the dynamic password, the method may further include: obtaining a service permission associated with the financial service, and setting a sharing permission associated with the sharing password according to the service permission. For example, the financial services may include opening of a new account and the service regarding money management, the service permission associated with the opening of a new account is that the identity information of the user is not visible, and the service permission associated with the service regarding money management is that the capital information of the user is not visible. Accordingly, different services correspond to different sharing permissions.

The remotely sharing the desktop corresponding to the financial service may include: remotely sharing the desktop corresponding to the financial service and matching the sharing permission.

The embodiment provides a permission setting mechanism, and the VTM terminal may set different sharing permissions according to service permissions. Thus, information security can be further guaranteed.

In some embodiments, in the method as shown in Fig. 2, before sending of the remote assistance request to the VTM network (step S201), the method may further include: receiving a user operation and setting an assistance permission for remote the assistance.

When the sharing password is set according to the dynamic password, the method may further include: setting a sharing permission associated with the sharing password according to the assistance permission.

The remotely sharing of the desktop corresponding to the financial service may include: remotely sharing the desktop corresponding to the financial service and matching the sharing permission.

In some embodiments, in the method as shown in Fig. 2, after remotely sharing of the desktop corresponding to the financial service (step S205), the method may further include: receiving a user operation, and ending connection of the remote sharing according to the user operation; or receiving a disconnection request sent from the VTM network side device, and ending connection of the remote sharing; and clearing the dynamic password and the sharing password.

In the embodiment, the dynamic password and the sharing password are cleared after the sharing is ended, so that the dynamic password can be used only for once, that is, even if other people cracks the dynamic password, the cracked dynamic password will become invalid during the next sharing. Thus, the information security can be further enhanced.

### Third Embodiment

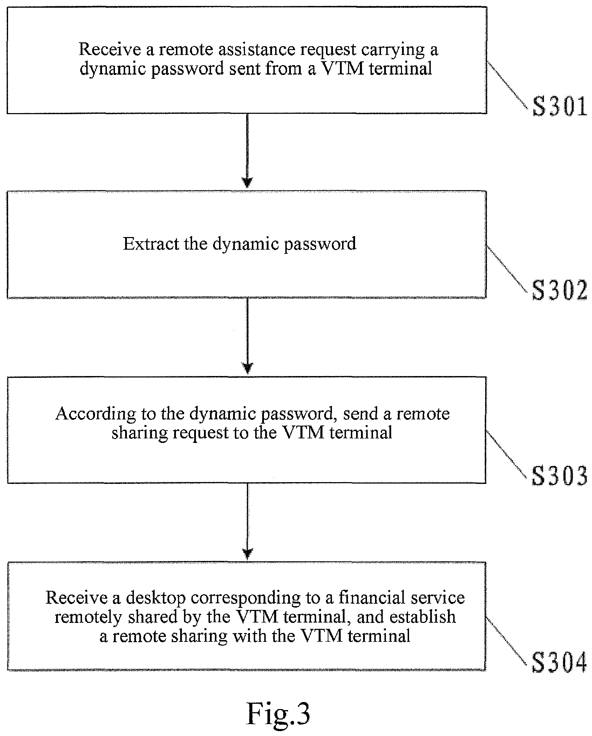

Fig. 3 is a flow chart showing a method for remote sharing according to the third embodiment of the present disclosure. As shown in Fig. 3, the method for remote sharing according to the embodiment of the present disclosure, applied in a VTM network side device in a VTM system, may include the following steps.

In S301, a remote assistance request carrying a dynamic password sent from a VTM terminal is received.

In S302, the dynamic password is extracted.

In S303, according to the dynamic password, a remote sharing request is sent to the VTM terminal.

In S304, a desktop corresponding to a financial service remotely shared by the VTM terminal is received, and a remote sharing is established with the VTM terminal.

In some embodiment, in the method for remote sharing as shown in Fig. 3, after establishing of the remote sharing with the VTM terminal, the method may further include: receiving an assistance termination request sent from the VTM terminal, and ending connection of the remote sharing; or receiving an operation from a bank staff, and ending the connection of the remote sharing according to the operation from the bank staff; and clearing the dynamic password.

Further, the present disclosure provides a method for remote sharing in a VTM system. According to an embodiment, the method may include:
receiving, by a VTM terminal, a selection operation from a user when the user conducts a financial service using the VTM terminal and needs a remote assistance, and generating a dynamic password;
setting, by the VTM terminal, a sharing password according to the dynamic password, and sending a remote assistance request carrying the dynamic password to a VTM network side device;
extracting, by the VTM network side device, the dynamic password, and sending a remote sharing request to the VTM terminal according to the dynamic password;
receiving, by the VTM terminal, the remote sharing request sent from the VTM network side device, and verifying the remote sharing request; if the remote sharing request passes the verification, remotely sharing, by the VTM terminal, a desktop corresponding to the financial service with the VTM network side device.

The technical solutions of the present disclosure will be explained with reference to specific application examples.

### Fourth Embodiment

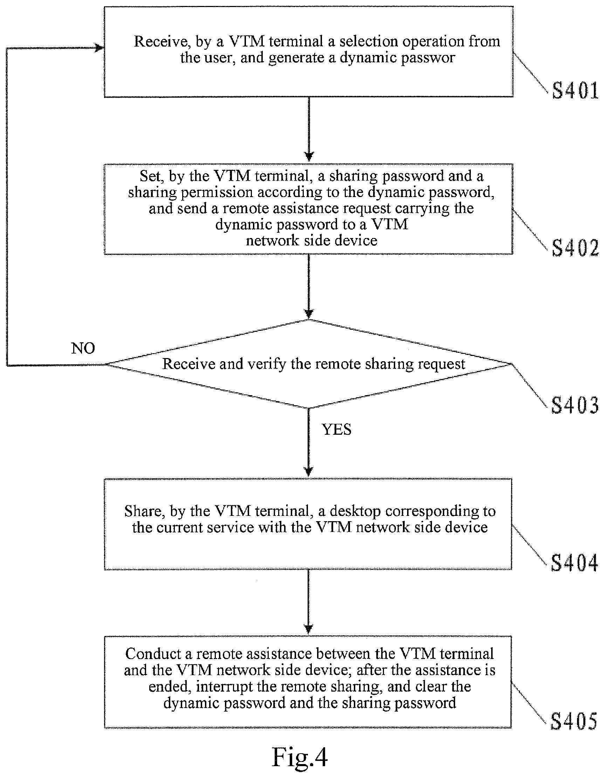

In the embodiment, for example, a user wants to open a new account and he/she does not how to call a handwriting board to write reference words. Fig. 4 is a flow chart showing a method for remote sharing according to the fourth embodiment of the present disclosure. As can be seen from Fig. 4, the method for remote sharing according to the fourth embodiment of the present disclosure, applied in a VTM system, may include the following steps.

In S401, a VTM terminal receives a selection operation from the user, and generate a dynamic password.

When the user conducts the service of opening a new account, he/she does not know how to call a handwriting board to write reference words, and the problem cannot be solved even by the communications with a bank staff via videos, a remote assistance from the bank staff is needed. The user can perform a selection operation to select the remote assistance function.

After receiving the selection operation from the user, the VTM terminal generates a dynamic password. In the embodiment, the VTM terminal may obtain the dynamic password by adding the time for the selection operation, a source ID (i.e., the device number of the VTM terminal), and a destination ID (i.e., the number or code of the bank staff providing services to the user) with a random number.

In S402, the VTM terminal sets a sharing password and a sharing permission according to the dynamic password, and sends a remote assistance request carrying the dynamic password to a VTM network side device.

In the embodiment, the VTM terminal directly sets the dynamic password as the sharing password. Then, the VTM terminal obtains the service permission of the service, and set the sharing permission according to the service permission (for example, the sharing permission may be that the opposite end can operate the desktop or the opposite end cannot operate the desktop). Because the user cannot find the handwriting function and he/she needs the bank staff to help him/her find the handwriting function, the sharing permission may be set as that "the opposite end can operate the desktop/user identity information is not visible".

In S403, the VTM terminal receives and verifies a remote sharing request which is sent from the VTM network side device according to the dynamic password, and if the remote sharing request passes the verification, step S404 is performed; if the remoted sharing request does not pass the verification, the flow returns to S401.

After receiving the remote assistance request, the VTM network side device may extract the dynamic password, and send the remote sharing request according to the dynamic password. After receiving the remote sharing request, the VTM terminal verifies the remote sharing request.

According to an embodiment, the VTM network side device may send the remote sharing request according to the dynamic password using the following two approaches.

In a first approach, the VTM network side device 12 generates a sharing password according to the dynamic password (the mechanism for generating the sharing password is the same as the mechanism for setting the sharing password at the VTM terminal), and then what is carried in the remote sharing request sent at this time is the sharing password. The VTM terminal compares the sharing password carried in the remote sharing request with the sharing password in the VTM terminal, and if the two passwords are the same, it can be determined that the remote sharing request passes the verification.

In a second approach, the VTM network side device 12 performs no processing on the dynamic password, and what is carried in the remote sharing request is the dynamic password. At this time, the VTM terminal processes the dynamic password carried in the remote sharing request (the processing is the same as the processing for setting the sharing password according to the dynamic password by the VTM terminal), compares the obtained sharing password and the sharing password in the VTM terminal, and if the two passwords are the same, it can be determined that the remote sharing request passes the verification.

In the embodiment, it is assumed that the VTM network side device uses the second approach to send the remote sharing requesting carrying the dynamic password.

In S404, the VTM terminal shares a desktop corresponding to the current service.

In the embodiment, the VTM terminal may send the desktop corresponding to the current service in an operable form to the VTM network side device.

In S405, a remote assistance is conducted between the VTM terminal and the VTM network side device. After the assistance is ended, the remote sharing is interrupted, and the dynamic password and the sharing password are cleared.

In the fourth embodiment, the VTM terminal sets a sharing permission according to a service permission, and thus information security can be further enhanced.

### Fifth Embodiment

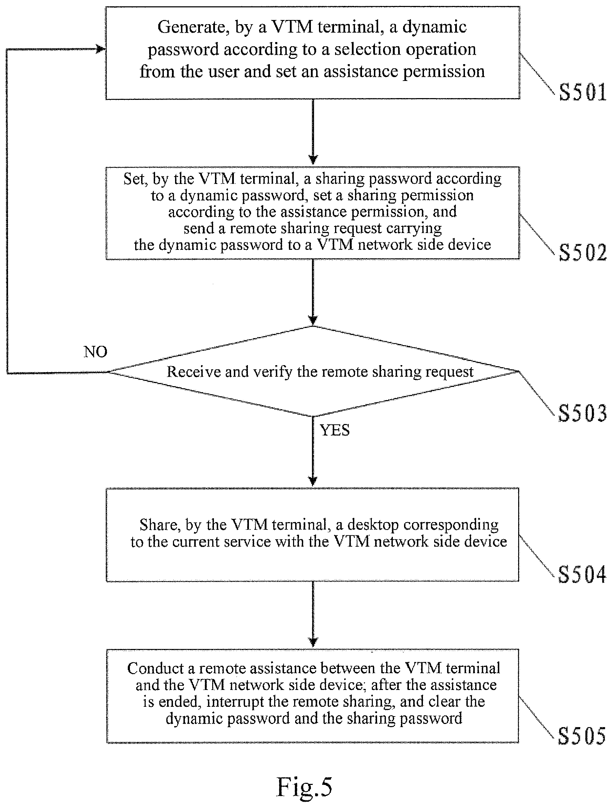

In the embodiment, for example, a user selects an assistance permission (i.e., some important information is not visible by the opposite end and the opposite end cannot operate the interface), and the user meets with a problem that "whether an input format of a certain item is right cannot be determined". Fig. 5 is a flow chart of a method for remote sharing according to the fifth embodiment of the present disclosure. As can be seen from Fig. 5, the method for remote sharing according to the embodiment of the present disclosure, applied in a VTM system, may include the following steps.

In S501, a VTM terminal generates a dynamic password according to a selection operation from the user and set a sharing permission.

In the embodiment, for example, when the user opens a new account, whether the input format of a certain item is right cannot be determined, and this problem cannot be solved even after communication with a bank staff via videos, a remote assistance from the bank staff is needed. At the same when the user selects the remote assistance function, the user also sets an assistance permission.

In S502, the VTM terminal sets a sharing password according to a dynamic password, sets a sharing permission according to the assistance permission, and sends a remote sharing request carrying the dynamic password to a VTM network side device.

In the embodiment, the VTM terminal may directly set the dynamic password as the sharing password, and then the VTM terminal, according to the assistance permission (i.e., the assistance permission requires that some important information is not visible by the opposite end and the opposite end cannot operate the interface), sets the sharing permission as that "the opposite end cannot operate the desktop".

In S503, the VTM terminal receives and verifies a remote sharing request sent by the VTM network side device according to the dynamic password, and if the remote sharing request passes the verification, step S504 is performed; and if the remote sharing request does not pass the verification, the flow returns to step S501.

In the embodiment, it is assumed that the VTM network side device uses the first approach described in connection with the fourth embodiment to send the remote sharing request carrying the sharing password which is obtained by processing the dynamic password.

In S504, the VTM terminal shares the desktop corresponding to the current service.

In the embodiment, the VTM terminal sends the desktop corresponding to the current service in an inoperable form to the VTM network side device, and meanwhile blocks important information such as identity information and bank card information in the desktop.

In S505, a remote assistance is conducted between the VTM terminal and the VTM network side device. After the assistance is ended, the remote sharing is interrupted, and the dynamic password and the sharing password are cleared.

In view of the above description, the technical solutions provided by embodiments can have the following advantageous effects.

In the remote sharing technology provided by embodiments of the present disclosure, when a financial service selected by a user is performed at a VTM terminal, if the user does not know how to operate, the VTM terminal receives a selection operation by which the user requests a remote assistance, and generates a dynamic password. The VTM terminal, based on the dynamic password, sets a sharing password. A VTM network side device initiates a remote sharing request based on the dynamic password, thereby realizing sharing of a financial service interface at the VTM terminal. During the procedure, neither the user nor a back staff needs to know the sharing password (and thus no leakage of password occurs), and the sharing password is set based on the dynamic password and other people cannot know the sharing password and therefore cannot illegally logs into the VTM terminal of the user to steal the user information. As a result, the technical solutions in the present disclosure can guarantee that user information cannot be illegally obtained by other people, can solve the insecurity problems of user information in remote sharing technologies in related arts, and thus users' usage experience can be improved.

Further, the present disclosure provides a mechanism for setting a sharing permission. Specifically, the sharing permission of bank staffs can be set according to actual situations, and some important information can be prevented from being viewed by bank staffs. Thus, information security can be enhanced.

Further, every time when the sharing is ended, the dynamic password and the sharing password are cleared, so that dynamic passwords need to be newly generated for any possible subsequent sharing operations, instead of repeat usage of the same dynamic password. Thus, users' usage experience can be further improved.

The exemplary embodiments of the present disclosure described above are illustrative but not for limiting the present disclosure in any way. Any amendments, equivalent changes, combinations or modifications without departing from the technical essence of the present disclosure fall within the protection scope of the present disclosure.

### Industrial Applicability

In the above remote sharing technology provided by embodiments of the present disclosure, when a financial service selected by a user is performed at a VTM terminal, if the user does not know how to operate, the VTM terminal receives a selection operation by which the user requests a remote assistance, and generates a dynamic password. The VTM terminal, based on the dynamic password, sets a sharing password. A VTM network side device initiates a remote sharing request based on the dynamic password, thereby realizing sharing of a financial service interface at the VTM terminal. During the procedure, neither the user nor a back staff needs to know the sharing password (and thus no leakage of password occurs), and the sharing password is set based on the dynamic password and other people cannot know the sharing password and therefore cannot illegally logs into the VTM terminal of the user to steal the user information. As a result, the technical solutions in the present disclosure can guarantee that user information cannot be illegally obtained by other people, can solve the insecurity problems of user information in remote sharing technologies in related arts, and thus users' usage experience can be improved. Consequently, the present disclosure has industrial applicability.

## Claims

1. A method for remote sharing, applied in a Virtual Teller Machine (VTM) terminal in a VTM system, comprising:
receiving a selection operation from a user when the user conducts a financial service using the VTM terminal and needs a remote assistance, and generating a dynamic password;
setting a sharing password according to the dynamic password;
sending a remote assistance request carrying the dynamic password to a VTM network side device;
receiving a remote sharing request sent by the VTM network side device according to the dynamic password; and
verifying the remote sharing request, if the remote sharing request passes the verification, remotely sharing a desktop corresponding to the financial service.

2. The method for remote sharing according to claim 1, wherein when the sharing password is set according to the dynamic password, the method further comprises: obtaining a service permission associated with the financial service, and setting a sharing permission associated with the sharing password according to the service permission;
wherein the remotely sharing the desktop corresponding to the financial service comprises:
remotely sharing the desktop corresponding to the financial service and matching the sharing permission.

3. The method for remote sharing according to claim 1, wherein before sending of the remote assistance request, the method further comprises:
receiving a user operation and setting an assistance permission for remote the assistance; and
when the sharing password is set according to the dynamic password, the method further comprises:
setting a sharing permission associated with the sharing password according to the assistance permission; and
the remotely sharing of the desktop corresponding to the financial service comprises:
remotely sharing the desktop corresponding to the financial service and matching the sharing permission.

4. The method for remote sharing according to any one of claims 1 to 3, wherein after remotely sharing of the desktop corresponding to the financial service, the method further comprises:
receiving a user operation, and ending connection of the remote sharing according to the user operation; or receiving a disconnection request sent from the VTM network side device, and ending connection of the remote sharing; and
clearing the dynamic password and the sharing password.

5. A method for remote sharing, applied in a Virtual Teller Machine (VTM) network side device in a VTM system, comprising:
receiving a remote assistance request carrying a dynamic password sent from a VTM terminal;
extracting the dynamic password;
according to the dynamic password, sending a remote sharing request to the VTM terminal; and
receiving a desktop corresponding to a financial service remotely shared by the VTM terminal, and establishing a remote sharing with the VTM terminal.

6. The method for remote sharing according to claim 5, wherein after establishing of the remote sharing with the VTM terminal, the method further comprises:
receiving an assistance termination request sent from the VTM terminal, and ending connection of the remote sharing; or receiving an operation from a bank staff, and ending the connection of the remote sharing according to the operation from the bank staff; and
clearing the dynamic password.

7. A method for remote sharing in a Virtual Teller Machine (VTM) system, comprising:
receiving, by a VTM terminal, a selection operation from a user when the user conducts a financial service using the VTM terminal and needs a remote assistance, and generating a dynamic password;
setting, by the VTM terminal, a sharing password according to the dynamic password, and sending a remote assistance request carrying the dynamic password to a VTM network side device;
extracting, by the VTM network side device, the dynamic password, and sending a remote sharing request to the VTM terminal according to the dynamic password;
receiving, by the VTM terminal, the remote sharing request sent from the VTM network side device, and verifying the remote sharing request; if the remote sharing request passes the verification, remotely sharing, by the VTM terminal, a desktop corresponding to the financial service with the VTM network side device.

8. A Virtual Teller Machine (VTM) terminal, comprising:
a first processing module configured to receive a selection operation from a user when the user conducts a financial service using the VTM terminal and needs a remote assistance, and generate a dynamic password;
a setting module configured to set a sharing password according to the dynamic password;
a first sending module configured to send a remote assistance request carrying the dynamic password to a VTM network side device;
a first receiving module configured to receive a remote sharing request sent by the VTM network side device according to the dynamic password; and
a sharing module configured to verify the remote sharing request, if the remote sharing request passes the verification, remotely share a desktop corresponding to the financial service.

9. The VTM terminal according to claim 8, further comprising:
a sharing-interruption module configured to receive a user operation, and end connection of the remote sharing according to the user operation; or receive a disconnection request sent from the VTM network side device, and end connection of the remote sharing; and
a clearing module configured to, after the sharing-interruption module ends the connection of the remote sharing, clear the sharing password.

10. A Virtual Teller Machine (VTM) network side device, comprising:
a second receiving module configured to receive a remote assistance request carrying a dynamic password sent from a VTM terminal;
a second processing module configured to extract the dynamic password;
a second sending module configured to, according to the dynamic password, send a remote sharing request to the VTM terminal; and
a sharing communication module configured to receive a desktop corresponding to a financial service remotely shared by the VTM terminal, and establish a remote sharing with the VTM terminal.

11. A Virtual Teller Machine (VTM) system, comprising the VTM terminal according to claim 8 or 9 and the VTM network side device according to claim 10.
